# EUROPEAN PATENT SPECIFICATION

(11) **EP 0 297 263 B1**
(45) Date of publication and mention of the grant of the patent: **18.11.1993**
(21) Application number: 88107856.2
(22) Date of filing: 17.05.1988
(51) Int. Cl.: F16H 7/18

(54) **A pre-assembled drive transmission device for transmitting drive between parallel axes**
Vormontierte Antriebseinrichtung zur Antriebsübertragung zwischen parallelen Achsen
Dispositif de Transmission préassemblé pour transmettre l'entraînement entre des axes parallèles

(30) Priority: 02.06.1987 IT 5336487 U
(43) Date of publication of application: 04.01.1989
(73) Proprietor: FIAT AUTO S.p.A., 10135 Torino (IT)
(72) Inventor: Ricordi, Eppo, I-10093 Collegno (IT); Bertero, Giorgio, I-10024 Moncalieri (IT)
(74) Representative: Bongiovanni, Guido

(56) References cited:
- EP-A- 280 365
- EP-A- 291 110
- DE-A- 3 202 843
- DE-A- 3 417 099
- GB-A- 1 283 520
- US-A- 2 601 789

## Description

The present invention relates to a pre-assembled transmission device of the type particularly adapted to be used for actuating the distributor system or other services of a vehicle.

From e.g. DE-A-3202843 it is known that for transmission of rotary drive between two or more parallel axes, for example between the engine shaft of a vehicle and one or more shafts for actuating various services of the vehicle itself, such as the distributor, oil or water pump, the alternator or the like, rotating members constituted by pulleys or gears are commonly used, which are fitted one on the drive shaft and the others on the driven shafts, and a flexible transmission member constituted by a belt or chain, usually a roller link chain, which passes as a loop around the rotating members; to attenuate the inevitable noise due to the vibrations of the flexible member, when this is constituted by a chain, a silencer shoe is also employed, consisting of a guide element defining, channels between the driven members and the driving member, in which the chain slides guided along a precise trajectory. This silencer shoe is optionally provided also with abutments able to allow the assembly of various rotating members of the device with a correct inter-axial separation, whereby to ensure correct tension of the chain.

Transmission devices of the type described have the serious disadvantage of not being able to be mounted in a substantially automatic manner, in that they are constituted by separate pieces which must be assembled separately on the engine and on the members to be driven; to this already serious disadvantage there is further added the fact that disadvantages can generally be created upon assembly due to imprecise positioning of the various members so that it is generally necessary to use tensioner pulleys in order to ensure correct tension of the flexible member.

The object of the present invention is that of obviating the said disadvantages and, in particular, is that of providing a transmission device of the type described but which can be completely pre-assembled and tested away from the assembly line and therefore fitted in an automatic manner with a single operation. A further object of the invention is that of providing a transmission device formed as an independent unit which, in the case of breakdown, can be rapidly replaced with a single dismantling/assembly operation like a disposable cartridge.

The said objects are achieved by the invention which relates to a pre-assembled transmission device for transmitting rotary drive between parallel axes, as defined in Claim 1.

For a better understanding of the invention a non-limitative description of an embodiment thereof is now given with reference to the attached drawings, in which:

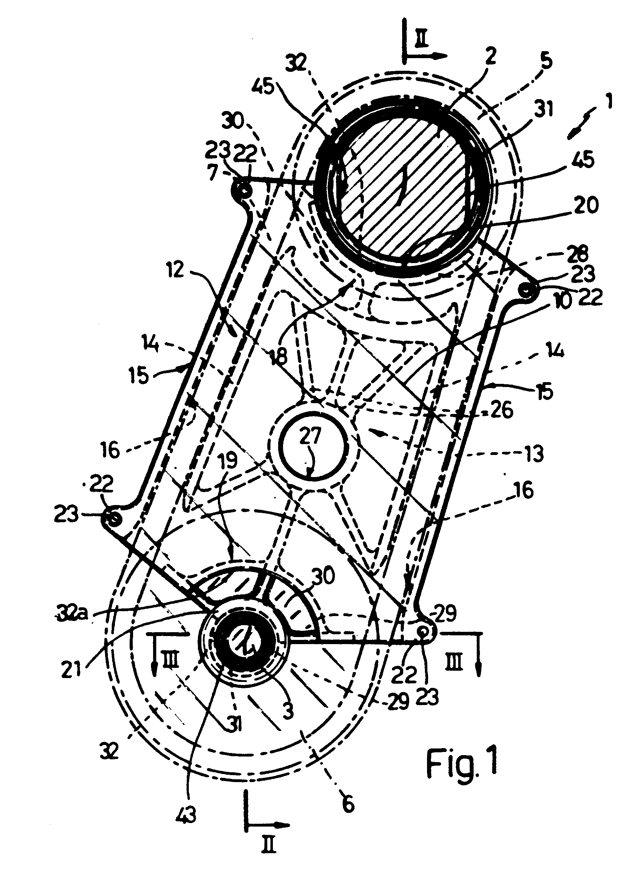

Figure 1 schematically illustrates in side view a pre-assembled transmission device formed according to the invention; and
Figures 2 and 3 are respective section views taken on the line II-II and III-III showing details of the device of Figure 1.

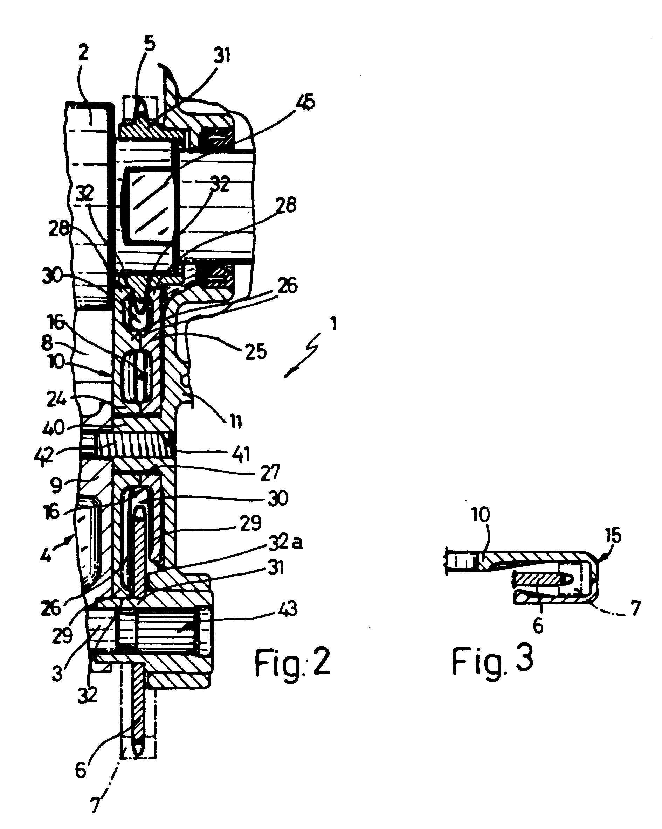

With reference to Figures from 1 to 3 a pre-assembled transmission device for transmitting rotary drive between parallel axes is generally indicated with the reference numeral 1. In this case the rotary drive is transmitted between a drive shaft 2 and a driven shaft 3 of a known propulsion engine unit 4, illustrated on part of a known vehicle, not illustrated for simplicity; the device 1 includes the rotary drive member, constituted by a first sprocket 5 fitted on the shaft 2, one or more rotary driven members, in the present case a single further sprocket 6 fitted on the shaft 3, which drives a non-illustrated service of the propulsion engine unit 4, for example the oil pump, and a flexible transmission member 7 illustrated in broken outline, for example constituted by a roller link chain of known type passing in a loop around the sprockets 5 and 6 and meshing therewith in such a way as to define a closed annular path along which the chain 7 translates driven by the sprocket 5 and in turn driving the sprocket 6 to rotate with a velocity proportional to the ratio between the number of teeth of the sprockets 5 and 6 themselves. The shafts 2 and 3 are supported in the illustrated example by an engine block 8 of known type and only partially illustrated and by a pump body 9 of the said oil pump fixed to a lower part of the engine block 8 together with a sump of known type not illustrated for simplicity. According to the invention the device 1 further includes a supporting reinforcement 10 preferably made, at least in part, of moulded synthetic plastics material; a cover 11 over the reinforcement 10 and the sprockets 5 and 6, as well as the chain 7, coupled in superimposition therewith. The reinforcement 10 is integrally provided with a silencer shoe 12 of known type, which is constituted by a central portion 13 and respective longitudinal peripheral lateral edges 14 and 15 of the reinforcement 10 itself, defining respective calibrated guide channels 16 the axes of which are not necessarily parallel to the line joining the primitive diameters of the sprockets 5 and 6, within which is housed part of the chain 7 and within which the chain 7 is able to slide in a guided manner cooperating with the sides 14 and 15; the function of the silencer shoe 12, completed by the said details of the reinforcement 10 in which, according to the invention, it is house, is known; the guide channel 16 which it defines exerts a supporting, guidance and transverse containment action on the chain 7 so that lateral vibrations of this are limited to the minimum with a consequent noise reduction. For the same purpose the sides 15 are U-shape in cross-section (Figure 3) so as also to exert a lateral containment action on the chain 7.

According to the invention the supporting reinforcement 10 in which the silencer shoe 12, known per se, is housed, is integrally provided at its respective ends 18 and 19 with respective semi-circular housing seats 20 and 21 which freely support the sprockets 5 and 6 at a predetermined inter-axial distance from one another, and which are shaped in such a way as to be interconnected by the guide channels 16; the term "interconnected" is intended to mean that the seats 20 and 21 are disposed in such a way as to permit the chain 7 housed in the channels 16 to engage regularly without interference over the sprockets 5 and 6 supported by it. For this purpose, at the opposite entrances to the channels 16 the reinforcement 10 has respective widened projecting corners 22 shaped as ears and provided with respective transverse reinforcing and containment pins 23 passing therethrough. Preferably the reinforcement 10 is formed by a pair of substantially flat half-shells 24 and 25 made of moulded plastics material juxtaposed adjacent one another with their respective concavities facing and mutually fixed together, for example by adhesive. Both the half-shells 24 and 25 are internally provided with respective reinforcing ribs 26 and with respective corresponding central perforations defining, when the half-shells are joined, a central cylindrical bush 27 which is however formed integrally with the reinforcement 10 and which serves, as will be better explained hereinbelow, both for handling the whole unit 1 and for fixing it to the cover 11 leaving the armature-cover unit free to move more or less according to the production requirements. The housing seats 20 and 21 are defined by respective pairs of projections 28 and 29 shaped substantially as semi-circular forks and disposed facing in superimposed positions at a predetermined mutual separation in such a way as to delimit between them spaces 30 which are open laterally and frontally and each housing at least part of a sprocket 5, 6; in particular the spaces 30 house a sector of a toothed peripheral portion of the sprockets 5 and 6, whilst respective hubs 31 thereof are housed within the seats 20 and 21 and in particular cooperate with respective concave semi-circular edges 32 frontally delimiting the projections 28 and 29, to be supported by these and laterally contained. In the illustrated example the end 18 supporting the driving sprocket 5 has both projections 28 identical and in contact with the hub 31 thereof, whilst the end 19 has projections 29 shaped in an asymmetric manner; in particular, only the projection 29 of the half-shell 24 has a shouldered edge 32 cooperating with the hub 31 of the driven gear 6, whilst the projection 29 of the half-shell 25 is shorter and has a frontal edge 32a which does not cooperate directly in contact with the gear 6, but serves only as protection for this. According to the invention the rotating members or gears 5 and 6 therefore cooperate on one side, along a first angular arc of relatively wide amplitude, with respective concave semi-circular seats 20 and 21, and on the opposite side, along a second angular arc, also of relatively great amplitude, with the chain portions 7 which pass over them; therefore the gears 5 and 6 are mounted trapped between the reinforcement 10 and the chain 7, retained in contact against the edges 32 of this latter, with obviously a small clearance for tolerance which permits subsequent alignments upon assembly to the engine; thanks to their semi-circular form the edges 32 form axial and transverse shoulders for the sprockets 5 and 6 and, at the same time, permit these to remain free to rotate with low friction around their axes of symmetry; the sprockets 5 and 6, on the other hand, together with the channels 16, hold the chain 7 substantially under tension and in mesh so that the whole device 1, thanks to the presence of the reinforcement 10, forms a monolithic self-supporting unit able to remain together forming a separate functional unit even when the sprockets 5 and 6 are not fitted onto the shafts 2 and 3.

In the non-limitative example illustrated the cover 11 is fixed to the reinforcement 10 by means of a pin 40 integrally formed with it and housable within the bush 27, possibly with a certain play; the pin 40 is also provided with a threaded through hole 41 by means of which the whole device 1 is fixable to a fixed support, via a threaded pin 42; the rotating members 5 and 6 are moreover shaped in such a way that they can be fitted to the shafts 2 and 3 simply by axial sliding them axially thereon; consequently the sprocket 6 is provided with a splined coupling 43 for fixing to the shaft 3, whilst the sprocket 5 is preferably provided with an angular coupling constituted by a pair of diametrically opposite flats 45 which can couple with corresponding flats on the shaft 2; finally, preferably, the hub 31 of the sprocket 5 can be coupled with radial play onto the shaft 2 so as to obtain an overall coupling between shaft 2 and sprocket 5 capable of transmitting torque, but at the same time also able to allow limited axial displacements of the axis of the sprocket 5 with respect to that of the shaft 2; in this way, as well as thanks to the said mounting clearances of the chain 7 and between the pin 40 and bush 27, it is possible to compensate for possible slight mis-alignments due to the working tolerances.

In use, the device 1 is pre-assembled away from the assembly line, for example on a bench, with different systems according as the reinforcement 10 is formed by superimposing the half-shells 24 and 25, as in the illustrated example, or is formed integrally by moulding in one piece; in the first case the half-shells 24 are first assembled to the sprockets 5 and 6 by engaging the hubs 31 onto the fork projections 28 and 29 against the semi-circular edges 32 and then the chain 7, already formed as a loop, is fitted around the sprockets in such a way as to hold the sprockets 5 and 6 against the projections 28 and 29; finally, the half-shell 28 provided with the chain 7 and sprockets 5 and 6 is fitted with the half-shell 25 which is fixed, for example by adhesive, thus achieving free housing of the sprockets 5 and 6 and the chain 7 respectively in the spaces 30 and in the guide channel 16, which are formed upon superimposition of the shells 24 and 25. In the second case, on the other hand, the sprockets 5 and 6 are mounted directly into the seats 20 and 21 of the monolithic reinforcement 10, contacting the hubs of these against the semi-circular edges 32 and housing the toothed parts adjacent them in the spaces 30; then the chain 7 is mounted onto the reinforcement 10 and threaded over the sprockets 5 and 6 by pressing one end of it first through the channel 16 and subsequently passing it over the toothed portions of the gears 5 and 6 opposite those housed in the spaces 30, and finally closing the chain 7 into a loop by joining the opposite ends together. In both cases a single independent unit is obtained in which the elements constituted by the reinforcement 10, the sprockets 5 and 6 and the chain 7 are held together by mutual constraint; the sprockets 5 and 6 being only in contact with the curved edges 32 made of plastics material. The sprockets themselves are also free to rotate with suitable clearances sliding with the hubs 31 on the shouldered edges 32 as if they were sliding bearings; the self-supporting independent assembly thus obtained, possibly already provided with the cover 11 by fitting it onto the reinforcement 10 with the chain 7 fitted, can then also be tested on the bench and finally sent to the assembly line; here, the mounting of the device 1 onto the engine block 8 and the shafts 2 and 3 can take place with a single operation which requires only elementary movements; in fact, it is clear that to mount the device 1 once this has been pre-assembled as described above, it is sufficient to present it in front of the engine block 8 with the axes of the sprokcets 5 and 6 aligned with those of the shafts 2 and 3 and then translate the entire unit constituted by the device 1, with a single movement towards the engine block 8 in such a way as to introduce the hubs 31 onto the shafts 2 and 3 until the reinforcement 10 is carried into contact against the engine block 8 itself; at this point the device can be fixed to the engine block 8 after possible assembly of the cover 11 if this has not already been effected, for example by means of screwing in the pin 42. The described operations, because of their simplicity, can be easily effected by a robot arm which grips the unit constituted by the preassembled device 1 by means of a pincer, for example across the bush 27; during mounting, possible positioning errors are compensated in part by the possibility of the sprocket 5 being offset with respect to the shaft 2 without creating disadvantages in the drive transmission, in part by the clearances between the sprockets, the chain and the supporting reinforcement, which are sufficient to allow misalignments, even though they are not such as to permit accidental dismantling of the chain reinforcement sprocket unit, and in part by the clearance between the bush 24 and the pin 40 which allows the cover 11 to guarantee the inter-axial separation between the shafts 2 and 3 at the same time compensating for possible misalignments.

From what has been described the advantages associated with the device according to the invention are evident; in fact it lends itself to being pre-assembled and tested away from the assembly line, providing a functional unit which is physically independent from the apparatus onto which the transmission device is to be mounted; this not only allows an improvement in the manner of assembly and the assembly time, but also makes it possible for assembly to be achieved in a totally automatic manner by means of robots; maintenance operations are also facilitated in that if the chain 7 becomes broken or worn, it is not necessary to dismantle the device 1 piece by piece to effect repair as in known devices, but simply by removing the entire device 1 and replacing it with a new one, similar to what is done with a disposable cartridge, the greater cost of the replacement part being amply compensated by the smaller cost for the labor. Finally, assembly of the sub-group itself, in the case where the reinforcement 10 is made in two elements, can be effected automatically with a robot thanks to the simplicity of the necessary operations.

## Claims

1. A pre-assembled transmission device for effecting transmission of rotary drive between parallel axes, of the type comprising at least one rotary drive member (5), at least one rotary driven member (6), a flexible transmission member (7) passing in a loop around the said rotary members, and a silencer shoe (12) defining respective guide channels (16) within which the said flexible transmission member (7) slides, wherein said silencer shoe (12) is integrally formed with a support reinforcement (10) defining, at one end a housing seat (20) which freely supports one of said rotary members and which is interconnected with the guide channels, and wherein said silencer shoe (12) defines a predetermined distance between said rotary members, characterised in that said support reinforcement (10) defines a further housing seat (21) for the other rotary member at the other end thereof, said housing Seats being defined by respective pairs of substantially fork-shape projections (28, 29) disposed facing one another at a mutually predetermined distance in such a way as to delimit between them laterally and frontally open spaces (30) housing at least part of a peripheral portion of the said rotating members (5, 6); the said projections (28, 29) being frontally delimited by respective concave semi-circular edges (32), and at least a first of the said edges (32) of each pair of projections (28, 29) cooperating with respective hubs (31) of the said rotary members to form support shoulders (32) thereof extending from said fork-shape projections parallel to said axes, the said rotary members (5, 6) being retained against the shouldered edges by the said flexible transmission member (7).

2. A device according to Claim 1, characterised by the fact that the said reinforcement (10) is made of synthetic plastics material, and by the fact that it is formed by a pair of substantially flat half-shells (24, 25) adjacently juxtaposed with their respective concavities facing one another.

3. A device according to Claim 1, characterised by the fact that the said reinforcement (10) is made by integral moulding in one piece in a synthetic plastics material.

4. A device according to any preceding Claim, characterised by the fact that it further includes a cover (11) adapted to be superimposed over the said reinforcement (10) and fixable thereto by means of a pin (40) which can be inserted, preferably with clearance, into a central bush (27) formed integrally with the reinforcement (10) itself; the said cover (11) being integrally formed with the said pin (40) and this latter being provided with a through hole (41) by means of which the cover (11) and the reinforcement (10) are fixable to an engine block.

5. A device according to any preceding Claim, characterised by the fact that at least one of the said rotary members (5, 6) is shaped such that it can be fitted with clearance onto a respective shaft (2, 3) by means of a pair of associated flats (45), in such a way as to be able to assume a position even slightly axially offset with respect to the said shaft (2).

## Patentansprüche

1. Vormontierte Antriebseinrichtung zur Antriebsübertragung zwischen parallelen Achsen des Typs, die mindestens ein rotierendes Antriebselement (5), mindestens ein rotierendes angetriebenes Element (6), ein in einer Schleife um die rotierenden Elemente herum umlaufendes flexibles Kraftübertragungs-Element (7) und einen Dämpfungsbeschlag (12) aufweist, der jeweils Führungskanäle (16) definiert, innerhalb derer das flexible Kraftübertragungs-Element (7) gleitet, wobei der Dämpfungsbeschlag (12) einstückig mit einer Stütz-Verstärkung (10) ausgebildet ist, die an einem Ende eine Lageraufnahme (20) definiert, die eines der rotierenden Elemente frei abstützt und die mit den Führungskanälen verbunden ist, und wobei der Dämpfungsbeschlag (12) eine vorbestimmte Distanz zwischen den rotierenden Elementen definiert, dadurch gekennzeichnet, daß
die Stütz-Verstärkung (10) an ihrem anderen Ende eine weitere Lageraufnahme (21) für das andere rotierende Element begrenzt, wobei die Lageraufnahmen jeweils durch Paare im wesentlichen gabelförmiger Vorsprünge (28, 29) definiert sind, die in einer gegenseitig festgelegten Entfernung einander gegenüberliegend so angeordnet sind, daß sie zwischen sich seitlich und stirnseitig offene Räume (30) begrenzen, die zumindest Teile der Randabschnitte der rotierenden Elemente (5,6) aufnehmen, wobei die Vorsprünge (28,29) stirnseitig jeweils durch konkave, halbkreisförmige Kanten (32) begrenzt sind und zumindest eine erste Kante (32) eines jeden Paares von Vorsprüngen (28, 29) mit den jeweiligen Naben (31) der rotierenden Elemente zusammenwirkt, um Stützschultern (32) zu bilden, die sich von den gabelförmigen Vorsprüngen weg und parallel zu den Achsen erstrecken, wobei die rotierenden Elemente (5,6) durch das flexible Kraftübertragungs-Element (7) gegen die Schulterkanten gedrückt werden.

2. Antriebseinrichtung nach Anspruch 1, dadurch gekennzeichnet, daß die Verstärkung (10) aus synthetischem Kunststoffmaterial gefertigt ist und dadurch, daß sie aus einem Paar im wesentlichen flacher Halbschalen (24, 25) gebildet ist, die aneinander angrenzend gegeneinandergefügt sind, wobei ihre jeweiligen Hohlräume einander gegenüberliegen.

3. Antriebseinrichtung nach Anspruch 1, dadurch gekennzeichnet, daß die Verstärkung (10) durch integrales Formen als einstückiges Teil aus synthetischem Kunststoffmaterial gefertigt ist.

4. Artriebseinrichtung nach einem der vorangehenden Ansprüche, dadurch gekennzeichnet, daß sie weiter eine Abdeckung (11) umfaßt, die so ausgebildet ist, daß sie die Verstärkung (10) überdeckt und daran durch einen Stift (40) befestigbar ist, der vorzugsweise mit Spiel in eine zentrale, einstückig mit der Verstärkung (10) selbst ausgebildete Buchse (27) eingeführt werden Kann, wobei die Abdeckung (11) einstückig mit dem Stift (40) ausgebildet ist, und wobei letztere eine durchgehende Bohrung (41) aufweist ist, mittels derer die Abdeckung (11) und die Verstärkung (10) mit einem Motorblock verbindbar sind.

5. Antriebseinrichtung nach einem der vorangehenden Ansprüche, dadurch gekennzeichnet, daß zumindest eines der rotierenden Elemente (5, 6) so geformt ist, daß es mittels eines Paares einander zugeordneter Abflachungen (45) mit Spiel auf einer jeweiligen Welle (2, 3) befestigt werden Kann, so daß es in der Lage ist, sogar eine geringfügig axial beabstandete Position bezogen auf die Welle (2) einzunehmen.

## Revendications

1. Dispositif de transmission préassemblé pour effectuer une transmission d'entraînement rotatif entre des axes parallèles, du type comprenant au moins un élément d'entraînement rotatif (5), au moins un élément entraîné rotatif (6), un élément de transmission flexible (7) passant en boucle autour de ces éléments rotatifs, et une semelle d'insonorisation (12) définissant des canaux de guidage respectifs (16) à l'intérieur desquels glisse l'élément de transmission flexible (7), dispositif dans lequel la semelle insonorisante (12) est formée d'un seul tenant avec un renforcement support (10) définissant, au niveau d'une extrémité, un siège de logement (20) qui supporte librement l'un de ces éléments tournants et qui est relié aux canaux de guidage, et dans lequel la semelle insonorisante (12) définit une distance prédéterminée entre ces éléments tournants, caractérisé en ce que ce renforcement support (10) définit un autre siège de logement (21) pour l'autre élément rotatif au niveau de son autre extrémité, ces sièges de logement étant définis par des paires respectives de saillies sensiblement en forme de chapes (28,29) disposées en vis-à-vis l'une de l'autre à une distance prédéterminée de manière à délimiter entre elles des espaces latéralement et frontalement ouverts (30) dans lesquels est logée au moins une partie d'une portion périphérique des éléments tournants (5,6), ces saillies (28,29) étant frontalement délimitées par des bords semi-circulaires concaves respectifs (32), et au moins l'un des bords (32) de chaque paire de saillies (28,29) coopérant avec les moyeux respectifs (31) des éléments tournants pour former des épaulements supports (32) s'étendant depuis les saillies en forme de chapes parallèlement aux axes, les éléments tournants (5,6) étant retenus contre les bords épaulés par l'élément de transmission flexible (7).

2. Dispositif selon la revendication 1, caractérisé par le fait que ce renforcement (10) est en matière plastique synthétique et par le fait qu'il est formé par deux demicoquilles pratiquement plates (24,25) juxtaposées adjacentes l'une à l'autre avec leurs concavités respectives en vis-à-vis l'une de l'autre.

3. Dispositif selon la revendication 1, caractérisé par le fait que ce renforcement (10) est fabriqué par moulage d'un seul tenant d'une matière plastique synthétique.

4. Dispositif selon l'une des revendications précédentes, caractérisé par le fait qu'il comprend en outre un couvercle (11) adapté pour être superposé sur le renforcement (10) et qu'il peut y être fixé au moyen d'une broche (40) qui peut être introduite, de préférence avec jeu, dans un manchon central (27) formé d'un seul tenant avec le renforcement (10) lui-même, ce couvercle (11) étant formé d'un seul tenant avec la broche (40) et cette dernière comportant un trou traversant (41) au moyen duquel le couvercle (11) et le renforcement (10) peuvent être fixés sur un bloc moteur.

5. Dispositif selon l'une des revendications précédentes, caractérisé par le fait qu'au moins l'un des éléments tournants (5,6) est formé de telle sorte qu'il peut être monté avec jeu sur un arbre respectif (2,3) au moyen de deux plats associés (45) de manière à pouvoir prendre une position même légèrement axialement déportée par rapport à l'arbre (2).
